# EUROPÄISCHE PATENTANMELDUNG

(11) **EP 4 095 645 A1**
(43) Veröffentlichungstag der Anmeldung: **30.11.2022**
(21) Anmeldenummer: 22175098.7
(22) Anmeldetag: 24.05.2022
(51) Int. Cl.: G05F 1/56, G06F 1/26, G06F 1/28, G06F 11/20, H02J 3/00

(54) **ANTRIEBSSTELLERBESCHALTUNG FÜR SICHEREN EINRICHT- UND TESTBETRIEB**

(30) Priorität: 25.05.2021 DE 102021113409
(71) Anmelder: Theegarten-Pactec GmbH & Co. KG, 01237 Dresden (DE)
(72) Erfinder: Blümel, Rolf, 04910 Elsterwerda (DE)
(74) Vertreter: Grünecker Patent- und Rechtsanwälte PartG mbB

(57) **Zusammenfassung**

Die vorliegende Erfindung betrifft ein Sicherheitssteuerungssystem welcher eine Schalteinrichtung enthält und steuert, die zwischen zwei alternativen Spannungsquellen und einer Verarbeitungsmaschine geschaltet ist. In einem Produktionsbetrieb wird die Verarbeitungsmaschine mit einer ersten Spannungsquelle verbunden. In einem Sonderbetrieb, wie beispielsweise Einricht- oder Testbetrieb, wird die Verarbeitungsmaschine mit einer zweiten Spannungsquelle verbunden, welche niedrige Spannung bereitstellt als die erste Spannungsquelle.

## Beschreibung

Die vorliegende Erfindung betrifft ein Sicherheitssystem beziehungsweise ein Sicherheitssteuerungssystem und ein entsprechendes Verfahren für einen sicheren Einrichtbetrieb oder Testbetrieb einer Verarbeitungsmaschine.

Wenn sich Bediener beim Einrichten oder Testen im Bereich einer Maschine aufhalten müssen, fordern Sicherheitsrichtlinien üblicherweise verschiedene Sicherheitsvorkehrungen. Unkontrollierte oder unerwartete Bewegungen können für die Personen in der Nähe einer Maschine eine Gefahr darstellen. Insbesondere bei Verarbeitungsmaschinen, die unter hohen Antriebsgeschwindigkeiten arbeiten können, wie beispielsweise Verpackungsmaschinen, sind für Sonderbetriebsarten wie ein Test- oder Einrichtbetrieb zuverlässige Sicherheitsmechanismen notwendig. Eine Grundforderung ist ein sicheres Verhindern von gefährdenden Situationen während des Einrichtens an einem zugänglichen Maschinenbereich. Die während des Produktionsbetriebs geschlossenen sicheren Schutztüren oder Schutzeinrichtungen der Gesamtmaschine können dabei geöffnet sein.

Das seit Jahrzehnten übliche mechanische Handrad zum Einrichten und Testen kann nur zum Bewegen von fest mechanisch verkoppelten Maschinenteilen eingesetzt werden. Dies wird als prinzipiell sicher angesehen, da bei geöffneten Schutztüren keine Energieeinleitung durch gesteuerte Antriebe möglich ist, und die Dossierung der Bewegung sowie die Verantwortung beim Nutzer eines solchen mechanischen Handrades liegt.

Für einen sicheren Einrichtbetrieb und/oder Testbetrieb separat antriebstechnisch bewegter Teile einer Maschine, kann nach dem Stand der Technik des Weiteren eine zweite mechanische Schutzebene bereitgestellt werden, beispielsweise ein sicherer, mechanisch fest verbauter Schutz beziehungsweise eine sichere, abgefragte oder zugehaltene Schutzabdeckung. Damit ist der Antrieb aber nicht mehr gefährdend und nicht eingeschränkt und kann alle Bewegungszustände (zum Beispiel auch die maximale. Geschwindigkeit) annehmen. Allerdings ist die konstruktive Umsetzung separater Schutzbereiche oftmals schwierig oder gar nicht möglich. Desweitern ist auch ein vollständiges Bedienen/ Zugreifen zu den Arbeitsorganen beim Einrichten/Testen nicht möglich.

Um diesen Nachteil zu vermeiden, kann ein Zustimmtaster für einen sicheren Einrichtbetrieb bereitgestellt werden. Dabei sind auch möglicherweise gefährdende Bewegungen von den zugänglichen Maschinebereichen bei Anwahl eines speziellen Betriebsmodus und dem aktiven gedrückt-Halten eines sichern Zustimmtasters erlaubt. In diesem Fall wird die Sicherheit durch eine bewusste Handlung an einer gefährdenden Maschine und das jederzeitigen mögliche manuelle Aktivieren der sicheren Momentabschaltung (abgekürzt als STO, aus dem englischen "Safe Torque Off") durch den Zustimmtaster verbessert.

Allerdings können für die Bewegung von Antrieben (auch im Einrichtbetrieb) hochdynamische Servomotoren und Servosteller zum Einsatz kommen, deren maximales Motormoment z.B. innerhalb 1 ms zur Verfügung steht. Solche im Fehlerfall kurzfristig möglichen Spitzenmomente und -geschwindigkeiten können mehrfach höher sein als während des normalen Produktionsbetriebs. Je nach der Antriebsauslegung und der Auslegung der angebundenen Mechanik können in einer kurzen Zeit (z.B. 5 bis 20 ms) hohe kinetische Energielevel erreicht werden, die ein hohes Verletzungsrisiko darstellen.

Zudem kommt, dass die Benutzung eines Zustimmtasters umständlich ist, und verschiedene Bedienhandlungen damit nicht möglich sind. Das Sicherheitskonzept mit einem Zustimmtaster ist nur unter der Voraussetzung als sicher anzusehen, wenn der Nutzer nicht in gefährdende Bereiche greift, da eine kritische Fehlfunktion mit dem Zustimmschalter nicht abgesichert werden kann. Sowohl normale Arbeitstakte, als auch die aus maximalen Drehmomenten und/oder Drehzahlen resultierenden Bewegungen können weit unterhalb der minimalen menschlichen Reaktionszeit liegen. Sicherer könnte in solchen Situationen eine Zweihandzustimmung sein.

Als Alternative gilt der Einsatz von sicheren Bewegungen (wie z.B. SLS - "Safe limited Speed", sichere begrenzte Geschwindigkeit). Dabei werden die angetriebenen Bewegungen sicher überwacht, und beim Verletzen der Sicherheitsbedingungen wird durch die Sicherheitseinrichtung die Sicherheit hergestellt (STO). Die Funktionen der sicheren begrenzten Bewegung sind gegenüber dem Zustimmtaster schneller und können weit vor einer sichtbaren Fehlfunktion "sicher" reagieren. Dies kann im Fall eines sicher überwachten Drehmoments (safe limited torque, SLT) schon vor der Bewegungsbildung sein.

Die Sicherheitseinrichtung kann in diesem Fall z.B. eine "SafeSPS", also eine sichere speicherprogrammierbare Steuerung (SPS) sein. Auch kurze Reaktionszeiten der Safe SPS von 10ms, können beim schlimmsten möglichen Szenario (auf Englisch "worst case scenario") oftmals, je nach elektrischer und mechanischer Antriebskonfiguration, zu lang sein. Beim Auslösen eines STO wird die durch das Wirken von maximalen Drehmoment/Kraft bis dahin erreichte Geschwindigkeit mit ihrer zugeordneten kinetischen Energie nur durch die im Antriebsstrang/Prozess wirkenden Gegenkräfte abgebaut. Ein "Sicherer Einrichtbetrieb" mit "Safe-Motion"-Funktionen wäre prinzipiell möglich. Es bedarf jedoch einer schlüssigen Nachweiskette, dass es für diese konkrete Antriebs- und Mechanik-Konfiguration funktioniert. Dies kann recht aufwendig sein und ist oftmals mit einem negativen Ergebnis verbunden.

Zudem existieren Ansätze aus dem Gebiet der kollaborierenden Roboter, in dem Sicherheitsfunktionen oftmals in Kombination eingesetzt werden.

Die Gefährdungen und das Verletzungsrisiko ergeben sich beispielsweise aus einer Kombination von den folgenden Komponenten:
- Geometrien der mechanischen Teile (bewegt und unbewegt) und deren geometrischen Zuordnung zueinander,
- den möglichen Bewegungsbereichen oder Bewegungsbahnen der potentiell gefährdenden mechanischen Teile,
- Notwendigkeit, Wahrscheinlichkeit, Häufigkeit und Dauer der Exposition im gefährdenden Bereich,
- gewollt zulässige Bewegungen während des Einrichtens (Sollzustand fürs Einrichten),
- Bewegungsgrenzen für das Auslösen der Sicherheitsfunktion,
- Reaktionszeit der Sicherheitskette (z.B. 11 ms) bis zum Wirksamwerden der Sicherheitsfunktion/ -einrichtung,
- Maximal mögliches Moment des Antriebs,
- Trägheitsmomente des Antriebsstrangs, und
- Mechanische Widerstandsmomente (z.B. Reibung).

Eine gezielte konstruktive Anpassung von Arbeitsorganen und Mechaniken zur Reduktion des Verletzungsrisikos ist oftmals gar nicht oder nur schwierig möglich.

Unter den bisherigen Lösungen gibt das Handrad eine gute Kontrolle, ist aber ohne Antrieb. Lösungen mit Antrieb stoßen an ihre Grenzen bei sehr schnellen Maschinen, wie z.B. Verarbeitungsmaschinen. Die unzureichende Sicherheit für Test- und Einrichtvorgänge an dezentralen Antrieben stellte schon oft einen wesentlichen Mangel bzgl. der Praxistauglichkeit solcher Lösungen dar.

Der vorliegenden Erfindung liegt die Aufgabe zugrunde, für das Einrichten und Testen von elektromechanischen Antrieben (z.B. servobasierten) an Verarbeitungsmaschinen (z.B. Verpackungsmaschinen) eine sichere oder eine die Sicherheit erhöhende Lösung zu finden, mit den Vorteilen eines mechanischen Handrades.

Die Aufgabe wird erfindungsgemäß mit den Merkmalen der unabhängigen Patentansprüche gelöst. Einige vorteilhafte Ausführungsformen sind Gegenstand der abhängigen Patentansprüche.

Der Erfindung liegt der Gedanke zugrunde, ein sicheres Umschalten der Zwischenkreisspannung auf ein niedrigeres Niveau zu ermöglichen. Im Gegensatz zu den bisherigen Lösungen, welche mit Antrieben hoher Leistung arbeiten bzw. die erst auf unzulässige Bewegungen reagieren müssen, ist bei dieser Lösung die Bildung von maximalen Kräften und Drehzahlen durch den Motor im Sonderbetrieb von vorneherein ausgeschlossen. Es bedarf auch hierfür einer schlüssigen Nachweiskette für die Sicherheit, dass es für diese konkrete Antriebs- und Mechanik-Konfiguration ohne unzulässige Gefährdung funktioniert. Dieser Nachweis kann mit der vorliegenden Erfindung leichter geführt werden.

Für den Fall, dass auch mit einem leistungseingeschränkten Betrieb eine relevante Gefährdung entsteht, kann über eine Kombination mit marktüblichen sicheren Bewegungsfunktionen eine weitere Reduktion der Gefährdung erreicht werden. Das Sicherheitsgefühl für den Nutzer wird ebenfalls verbessert, wenn er weiß, dass die volle Kraft und Leistungsentfaltung des Motors nicht nur durch die schnelle Reaktion des sicheren Antriebsstellers und das richtig programmierte Sicherheitsprogramm eingeschränkt wird, sondern auch durch die niedrige Spannung grundsätzlich nicht möglich ist. Komplexe Einricht- und Lernvorgänge, sowie Testbewegungen können uneingeschränkt durchgeführt werden.

Das für das Verletzungsrisiko maßgebliche Erreichen von hohen erreichbaren Kräften oder Drehmomenten beziehungsweise hohen kinetischen Energien sollte grundsätzlich verhindert werden. Das würde erlauben, dass sicheres Arbeiten beim Einrichten und Testen möglich wird, bei nahezu voller Funktionsfähigkeit der sicher leistungseingeschränkten Antriebe.

Es besteht die Möglichkeit für bestimmte elektromechanische Antriebskonfigurationen, dass der Einrichtbetrieb damit grundsätzlich sicher ist. Für kritischere Fälle könnte die erfindungsgemäße Lösung die Vorteile weiterer verfügbaren Funktionen aus dem Bereich sicherer Bewegungsfunktionen zusätzlich nutzen und deren Unzulänglichkeiten reduzieren. Bisher nicht mit sicheren Bewegungsfunktionen absicherbare Lösungen können in Kombination mit der vorliegenden Erfindung dann sicher werden, d.h. die Gefährdung ausreichend reduzieren.

Nach einer Ausführungsform wird ein Sicherheitssteuerungssystem (auch Sicherheitssystem genannt) für eine Verarbeitungsmaschine bereitgestellt. Das Sicherheitssteuerungssystem umfasst: einen ersten Anschluss, verbindbar mit einer ersten Spannungsquelle zum Bereitstellen einer ersten Spannung für einen Produktionsbetrieb; einen zweiten Anschluss, verbindbar mit einer zweiten Spannungsquelle zum Bereitstellen einer zweiten Spannung, welche niedriger ist als die erste Spannung, für einen Test- oder Einrichtbetrieb; einen dritten Anschluss, verbindbar mit einem elektrischen Antriebssystem der Verarbeitungsmaschine; eine Schalteinrichtung zum Verbinden des dritten Anschlusses mit entweder dem ersten Anschluss oder dem zweiten Anschluss; und eine Sicherheitssteuerung zum Steuern und/oder Überwachen der Schalteinrichtung.

Zum Zweck der Steuerung ist die Sicherheitssteuerung angepasst, (i) im Produktionsbetrieb den dritten Anschluss mit dem ersten Anschluss zu verbinden, und (ii) im Test- oder Einrichtbetrieb den dritten Anschluss mit dem zweiten Anschluss zu verbinden.

Das elektrische Antriebssystem ist insbesondere ein elektromechanisches Antriebssystem (z.B. elektromotorisches Antriebssystem). Die erste Spannung und die zweite Spannung dienen der Leistungsversorgung des elektromechanischen Antriebssystems jeweils in dem Produktionsbetrieb und in dem Test- oder Einrichtbetrieb.

Zum Zweck der Überwachung ist die Sicherheitssteuerung angepasst, (i) wenn der dritte Anschluss mit dem ersten Anschluss verbunden wird, den Produktionsbetrieb zu detektieren, und (ii) wenn der dritte Anschluss mit dem zweiten Anschluss verbunden wird, den Test- oder Einrichtbetrieb zu detektieren. Die Schalteinrichtung kann in diesem Fall manuell geschaltet werden. Beispielsweise kann die Schaltung zwischen dem Produktionsbetrieb und dem Test- oder Einrichtbetrieb manuell durchgeführt werden. Die Sicherheitssteuerung kann eine Betätigung des Schalters im Rahmen der Überwachung erfassen.

Beispielsweise enthält die Schalteinrichtung einen ersten Schalter welcher den dritten Anschluss mit dem ersten Anschluss trennbar verbindet; und einen zweiten Schalter welcher den dritten Anschluss mit dem zweiten Anschluss trennbar verbindet. In einer möglichen Umsetzung ist die Sicherheitssteuerung angepasst, den zweiten Schalter mit einer vorbestimmten Verzögerung nach dem Öffnen des ersten Schalters zu schließen.

Das Sicherheitssteuerungssystem enthält in einigen Ausführungsformen des Weiteren eine Trenndiode, welche die Verbindung zwischen dem zweiten Anschluss und dritten Anschluss in eine Richtung trennt.

Das Sicherheitssteuerungssystem umfasst zum Beispiel des Weiteren eine Trenndiode, welche die Verbindung zwischen dem zweiten Anschluss und dritten Anschluss in eine Richtung trennt, wobei bei geschlossenen zweiten Schalter die Trenndiode einen Stromfluss vom dritten Anschluss zum zweiten Anschluss verhindert.

Dabei ist die Sicherheitssteuerung insbesondere konfiguriert, den zweiten Schalter mit dem dritten Anschluss zu verbinden, wenn die Spannung an dem Antriebssystem der Verarbeitungsmaschine kleiner als die erste Spannung und größer als Null ist. Die Spannung kann z.B. 40-80 V betragen.

Gemäß einer vorteilhaften Ausführungsform enthält das Sicherheitssteuerungssystem des Weiteren eine Spannungsabbauschaltung, wobei die Spannungsabbauschaltung einen Spannungsabbauschalter und einen Spannungsabbauwiderstand enthält; die Spannungsabbauschaltung über den dritten Schalter mit dem dritten Anschluss trennbar verbunden ist; und die Sicherheitssteuerung angepasst ist, den Spannungsabbauschalter nach dem Öffnen des ersten Schalters zu schließen, und spätestens vor dem Wieder-Schließen des ersten Schalters zu öffnen.

Wenigstens einer von dem ersten Schalter, dem zweiten Schalter und dem Spannungsabbauschalter kann dabei ein Schaltschütz sein. Zusätzlich oder alternativ kann der erste, zweite oder dritte Schalter eine ausreichend groß dimensionierte und ausreichend sicher schaltende manuelle Schalteinrichtung sein, die von der Sicherheitssteuereinrichtung überwacht wird. Im Zusammenwirken mit einer Trenndiode kann auch ein kombinierter Schalter für den ersten, zweiten und dritten Schalter verwendet werden. Die Sicherheitssteuereinrichtung kann beispielsweise den Einrichtbetrieb (z.B. bei geöffneten Türen) oder Testbetrieb nur dann erlauben oder freigeben, wenn dies sicher ist, beispielsweise nach einer vorbestimmten Zeit nach dem Erfassen der manuellen Umschaltung, oder nachdem ermittelte Messwerte eine vorbestimmte Spannung nicht (mehr) überschreiten, oder Ähnliches.

Zum Beispiel ist die Sicherheitssteuerung des Weiteren angepasst, in dem Test- oder Einrichtbetrieb: das Moment, die Drehzahl und/oder die Position von einem oder mehreren Servomotoren der Verarbeitungsmaschine zu überwachen; und falls das Moment, die Drehzahl und/oder die Position von einem oder mehreren Motoren der Verarbeitungsmaschine einen vorbestimmten Maximalwert und oder einen vorbestimmten Bereich überschreitet, gemäß einer Sicherheitsfunktion der Sicherheitssteuerung der Verarbeitungsmaschine, die Bewegung stillzusetzten.

In einer vorteilhaften Ausgestaltung ist die Sicherheitssteuerung als eine sichere speicherprogrammierbare Steuerung, SPS, verwirklicht.

Der zweite Anschluss ist für die zweite Spannung ausgebildet, welche beispielsweise eine Gleichspannung von 24V bis 48V ist, die ausreichend sicher das eingestellte Level garantiert (z.B. ein 24V Netzteil, möglicherweise justierbar im Bereich von 22-28V), wie zum Beispiel eine Schutzkleinspannung. Der erste Anschluss ist für die erste Spannung ausgebildet, welche eine Einphasen-Wechselspannung von zumindest 110V oder eine Dreiphasen-Wechselspannung von zumindest 200 V ist.

Des Weiteren wird ein Verarbeitungssystem bereitgestellt, welches umfasst: eine Verarbeitungsmaschine mit einem oder mehreren Antrieben, umfassend Motoren, Umrichter und eine Maschinensteuerung; das Sicherheitssteuerungssystem wie oben beschrieben, wobei die Verarbeitungsmaschine angepasst ist, wenn die zweite Spannung angeschlossen ist, mit einer, im Vergleich zu Produktionsbetrieb reduzierten Geschwindigkeit und Kraft des einen oder mehrerer Servomotoren zu arbeiten.

Nach einer weiteren Ausführungsform wird ein Verfahren zur Sicherheitssteuerung für eine Verarbeitungsmaschine bereitgestellt. Das Verfahren umfasst das Erfassen von Signalen, zum Beispiel von einem Signal zum Wechseln von dem Produktionsbetrieb in den Einrichtbetrieb oder Testbetrieb oder von einem Signal zum Wechseln von dem Einrichtbetrieb oder Testbetrieb in den Produktionsbetrieb. Das Verfahren umfasst des Weiteren, nach dem Erfassen von einem Signal zum Wechseln der Betriebsart von dem Produktionsbetrieb in den Einrichtbetrieb oder Testbetrieb: Trennen eines elektrischen Antriebssystems der Verarbeitungsmaschine von der ersten Spannungsquelle und Verbinden des elektrischen Antriebssystems der Verarbeitungsmaschine mit einer zweiten Spannungsquelle zum Bereitstellen einer zweiten Spannung, welche niedriger ist als die erste Spannung. Das Verfahren umfasst des Weiteren, nach dem Erfassen von einem Signal zum Wechseln der Betriebsart von dem Einrichtbetrieb oder Testbetrieb in den Produktionsbetrieb: Trennen des elektrischen Antriebssystems der Verarbeitungsmaschine von der zweiten Spannungsquelle und Verbinden des elektrischen Antriebssystems mit der ersten Spannungsquelle.

In einer Ausführungsform enthält das Verfahren des Weiteren einen Übergang beim Einschalten der Maschine in: i) den Produktionsbetrieb; nach dem Erfassen von einem Signal zum Aktivieren des Produktionsbetriebes, Verbinden der ersten Spannungsquelle zum mit dem elektrischen Antriebssystem der Verarbeitungsmaschine; oder ii) den Einrichtbetrieb oder Testbetrieb; nach dem Erfassen von einem Signal zum Aktivieren des Sonderbetriebes, Verbinden der zweiten Spannungsquelle mit dem elektrischen Antriebssystem der Verarbeitungsmaschine.

Weitere Einzelheiten, Vorteile und Merkmale der Erfindung ergeben sich aus der folgenden Beschreibung und den Zeichnungen, auf die bezüglich aller nicht im Text beschriebenen Einzelheiten ausdrücklich verwiesen wird. Es zeigt:
- Fig. 1: eine schematische Darstellung eines Sicherheitssteuerungssystems in Verbindung mit zwei Spannungsquellen und einer Verarbeitungsmaschine.
- Fig. 2: eine schematische Darstellung einer funktionalen Struktur eines beispielhaften Sicherheitssteueru ngssystems.
- Fig. 3A: ein Blockschaltdiagramm einer ersten möglichen Umsetzung von dem Sicherheitssteuerungssystem sowie eines möglichen Einsatzes des Sicherheitssteuerungssystem, mit einer Schalteinrichtung vor dem Netzgleichrichter.
- Fig. 3B: ein Blockschaltdiagramm einer ersten möglichen Umsetzung von dem Sicherheitssteuerungssystem sowie eines möglichen Einsatzes des Sicherheitssteuerungssystem, mit einer Schalteinrichtung nach dem Netzgleichrichter.
- Fig. 4.: ein Blockschaltdiagramm einer zweiten möglichen Umsetzung von dem Sicherheitssteuerungssystem sowie eines möglichen Einsatzes des Sicherheitssteuerungssystem.
- Fig. 5: ein Blockschaltdiagramm einer dritten möglichen Umsetzung von dem Sicherheitssteuerungssystem sowie eines möglichen Einsatzes des Sicherheitssteuerungssystem.
- Fig. 6: ist ein schematischer Graph zur Verdeutlichung der Drehzalreduktion beim erfindungsgemäßen Wechseln von dem Produktionsbetrieb in einen Sonderbetrieb.
- Fig. 7: eine Illustration des Betriebs einer sicheren Achse.
- Fig. 8: ist ein Flussdiagram einer beispielhaften Ausführungsform eines Verfahrens zur Sicherheitssteuerung für eine Verarbeitungsmaschine.

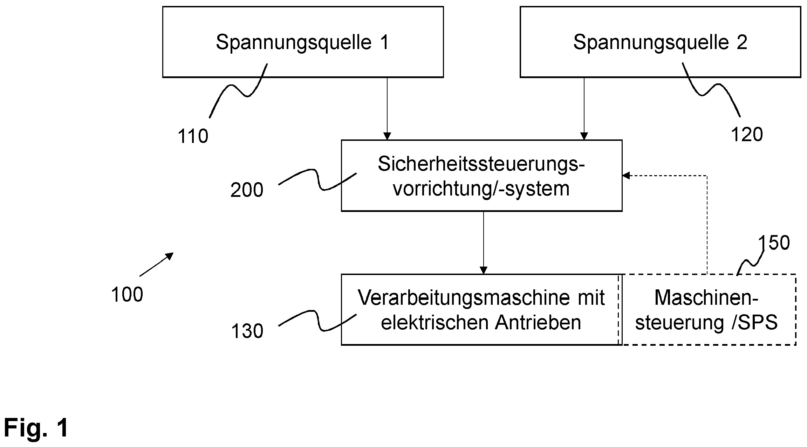

Figur 1 zeigt ein Verarbeitungssystem 100, welches eine Verarbeitungsmaschine mit elektrischen Antrieben 130, sowie eine Sicherheitssteuerungssystem 200 und zwei Spannungsquellen 110 und 120 enthält. Die Verarbeitungsmaschine 130 ist über die Sicherheitssteuerungsvorrichtung 200 mit einer ersten Spannungsquelle 110 und mit einer zweiten Spannungsquelle 120 gekoppelt. Zudem kann das Verarbeitungssystem eine entsprechende Maschinensteuerung, z.B. eine speicherprogrammierbare Steuerung, SPS, 150 enthalten, oder mit einer solchen verbunden sein.

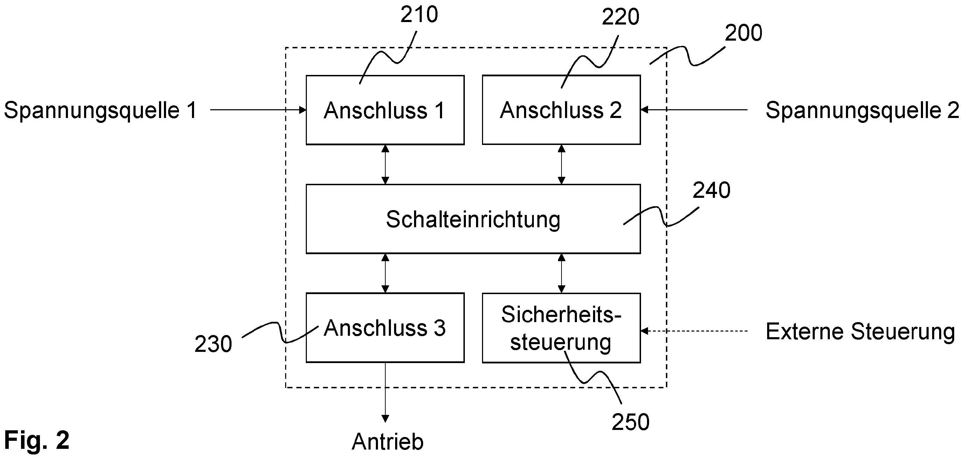

Nach einer beispielhaften Ausführungsform wird ein Sicherheitssteuerungssystem 200 für die Verarbeitungsmaschine 130 bereitgestellt. Dase Sicherheitssteuerungssystem 200 kann als eine Ergänzung der Steuerung der Verarbeitungsmaschine 130 dienen und ist in Figur 2 dargestellt.

Das Sicherheitssteuerungssystem 200 enthält einen ersten Anschluss 210, der mit einer ersten Spannungsquelle 110 zum Bereitstellen einer ersten Spannung für einen Produktionsbetrieb verbindbar ist. Der erste Anschluss kann mit der ersten Spannungsquelle 110 trennbar verbunden oder fest verbunden sein. Das Sicherheitssteuerungssystem 200 enthält des Weiteren einen zweiten Anschluss 220, verbindbar mit einer zweiten Spannungsquelle 120 zum Bereitstellen einer zweiten Spannung an die Verarbeitungsmaschine. Auch der zweite Anschluss kann mit der zweiten Spannungsquelle 120 trennbar verbunden oder fest verbunden sein. Die zweite Spannung ist niedriger als die erste Spannung und kann für einen Sonderbetrieb, wie beispielsweise den Test- oder Einrichtbetrieb, bereitgestellt werden.

Das Sicherheitssteuerungssystem 200 enthält des Weiteren einen dritten Anschluss 230, welcher mit der Verarbeitungsmaschine 130, und insbesondere mit dem elektrischen Antriebssystem der Verarbeitungsmaschine 130, verbindbar ist. Der dritte Anschluss entspricht einer Anschlusseinrichtung und kann mehrere separate Anschlüsse an Stromleitungen enthalten, welche zu dem Antriebssystem der Verarbeitungsmaschine führen. Diese können separat für unterschiedliche Spannungen sein. Die Verbindung zwischen der dritten Anschlusseinrichtung und dem Antriebssystem muss keine direkte sein. Es können dazwischen eines oder mehrere elektrische oder elektronische Komponenten vorliegen. Der dritte Anschluss kann mit dem Leistungsanschluss des elektrischen (elektromechanischen) Antriebssystem verbindbar und/oder verbunden werden.

Der dritte Anschluss kann also einer Anschlusseinrichtung entsprechen, welche einen allgemeinen Antriebsversorgungsanschluss umfasst, beispielsweise sowohl mit Klemmen für die höhere Dreiphasenspannung (z.B. 3~ 400V) als auch Klemmen für den Zwischenkreis (560V / 24V).

Das Sicherheitssteuerungssystem 200 enthält des Weiteren eine Schalteinrichtung 240 zum steuerbaren Verbinden des dritten Anschlusses mit entweder dem ersten Anschluss oder dem zweiten Anschluss, sowie eine entsprechende Sicherheitssteuerung 250 zum Steuern und/oder Überwachen der Schalteinrichtung. Die Sicherheitssteuerung 250 kann damit die Schalteinrichtung steuern. Zum Beispiel kann sie die Schalteinrichtung durch ein elektrisches Signal oder durch einen Steuerungsbefehl veranlassen umzuschalten. Zusätzlich, oder als eine Alternative zum Steuern, kann die Sicherheitssteuerung 250 die Schalteinrichtung überwachen. Dabei erfasst die Sicherheitssteuerung 250, ob die Schalteinrichtung beispielsweise manuell umgeschaltet wurde. Es sind auch Ausführungsformen möglich, bei denen das Sicherheitssteuerungssystem 200 keine Sicherheitssteuerung 250 aufweist.

Die Sicherheitssteuerung 250 ist angepasst, im Produktionsbetrieb den dritten Anschluss 230 mit dem ersten Anschluss 210 zu verbinden und die Verbindung des dritten Anschlusses 230 mit dem zweiten Anschluss 220 zu trennen (falls diese verbunden waren). Die Sicherheitssteuerung 250 ist des Weiteren angepasst, im Test- oder Einrichtbetrieb den dritten Anschluss 230 mit dem zweiten Anschluss 220 zu verbinden und die Verbindung des dritten Anschlusses 230 von dem ersten Anschluss 210 zu trennen (falls diese verbunden waren). Die Schalteinrichtung 240 kann in vielen unterschiedlichen Weisen ausgestaltet sein. Zum Beispiel kann diese separate Schalter (Schütze) zwischen dem dritten Anschluss 230 und dem jeweiligen ersten Anschluss 210 oder zweitem Anschluss 220 enthalten. Alternativ kann die Schalteinrichtung 240 einen Schalter enthalten, welcher zum Umschalten der Verbindung zwischen dem dritten Anschluss 230 und dem jeweiligen ersten Anschluss 210 oder zweitem Anschluss 220 oder einer Position in dem keine der Anschlüsse 210, 220 verbunden sind gewährleistet. Eine solche Position kann dem Ausschalten jeglicher Spannungszufuhr entsprechen. Weitere Ausgestaltungen sind denkbar und erfindungsgemäß einsetzbar.

Es sind zahlreiche Ausgestaltungen des Sicherheitssteuerungssystems 200 möglich. Gemäß einer vorteilhaften Ausführungsform ist das Sicherheitssteuerungssystem 200 als eine von der Verarbeitungsmaschine 130 separaten Vorrichtung ausgebildet. Diese kann zwischen die Maschine 130 und die Spannungsquellen 110, 120 geschaltet werden. Eine solche Umsetzung erlaubt den Einsatz auch bei Verarbeitungsmaschinen, welche eine solche Sicherheitssteuerung nicht besitzen. Das Sicherheitssteuerungssystem 200 kann als eine separate und alleinstehende Sicherheitssteuerungsvorrichtung ausgebildet sein. Alternativ kann eine externe Steuerung die Funktionen eines Teiles oder der ganzen Sicherheitssteuerung 250 übernehmen.

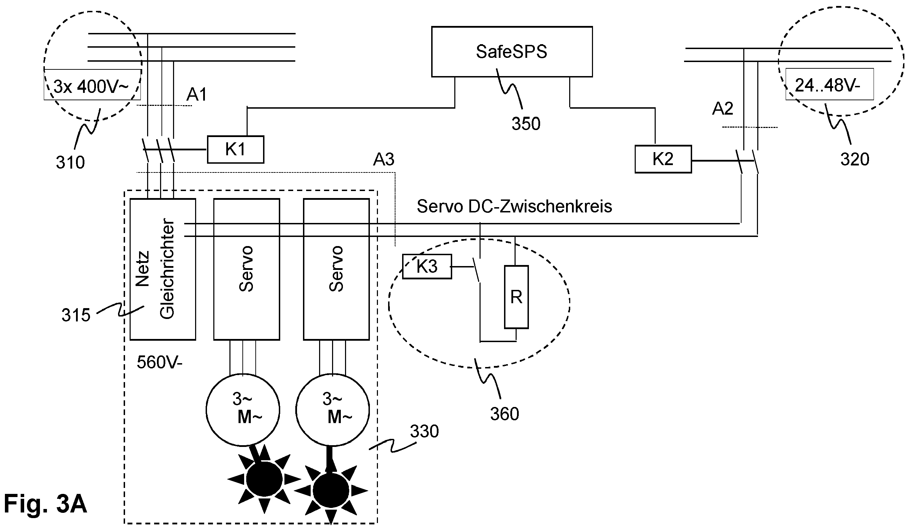

Figur 3A zeigt eine vorteilhafte Ausführungsform, in der die Schalteinrichtung 240 einen ersten Schalter K1 und einen zweiten Schalter K2 enthält. Dabei verbindet der erste Schalter K1 den dritten Anschluss 230 mit dem zweiten Anschluss 220 auf einer trennbare Weise. Der zweite Schalter K2 verbindet den dritten Anschluss 230 mit dem ersten Anschluss 210, ebenfalls trennbar. Als der erste Schalter K1 und/oder der zweite Schalter K2 können beispielsweise im Handel übliche Schütze (Schaltschütze) eingesetzt werden. Da die Schalter K1 und K2 unterschiedliche Spannungen schalten, können diese auch unterschiedlich ausgebildet sein.

Figur 3A zeigt des Weiteren schematisch die erste Spannungsquelle 210, welche in diesem Beispiel eine Dreiphasenwechselspannungsquelle 310 ist und die zweite Spannungsquelle 220, welche in diesem Beispiel eine Gleichspannungsquelle 320 von 24 V bis 48 V ist. Die Gleichspannungsquelle 320 kann auch ein Standardnetzteil sein, z.B. in einem Schaltschrank. Die erste Spannungsquelle 210 kann mit dem Antriebssystem der Verarbeitungsmaschine über das Sicherheitssteuerungssystem 200 und über einen Gleichrichter 315 verbunden sein. In der Figur 3A ist der erste Schalter K1 zwischen der ersten Spannungsquelle 310 und dem Gleichrichter 315 geschaltet.

In solchen Ausführungsformen kann sowohl der Gleichrichter 315 als auch Teile (z.B. die Schalter K1, K2, die Spannungsabbauschaltung 360, und die drei Anschlüsse) des Sicherheitssteuerungssystems 200 oder das ganze Sicherheitssteuerungssystem ein Teil der Verarbeitungsmaschine 330 sein. Die Verarbeitungsmaschine 330 enthält des Weiteren beispielsweise das Antriebssystem, welches einen oder mehrere Servomotoren umfasst. Allgemein ist die vorliegende Erfindung jedoch auf keine besondere Antriebsart der Verarbeitungsmaschine 330 eingeschränkt.

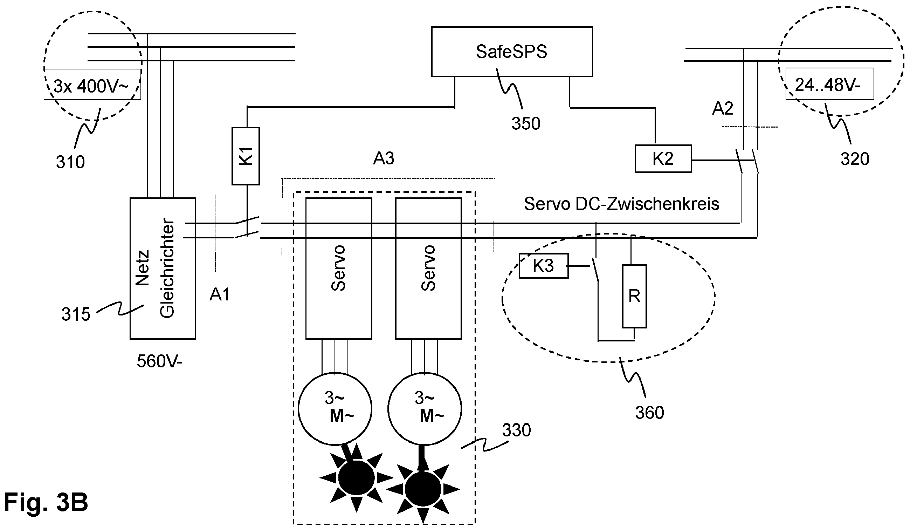

Bei einigen Ausführungsformen ist es jedoch möglich, den ersten Schalter K1 zwischen dem Gleichrichter 315 und dem Antriebssystem der Verarbeitungsmaschine 330 bereitzustellen. Eine solche Ausführungsform ist in Figur 3B gezeigt.

Wie in Figuren 3A und 3B gezeigt, wird erfindungsgemäß eine niedrigere Zwischenkreisspannung für den Einricht- und Testbetrieb als für den Normalbetrieb (Produktion) genutzt. Im Produktionsbetrieb bei voller Zwischenkreisspannung (z.B. 560V nach dem Gleichrichter 315) steht damit die volle Leistung und Dynamik der Antriebe zur Verfügung. Bei Anwahl des Einrichtbetriebs (oder Testbetriebs oder eines sonstigen Sonderbetriebs) erfolgt eine sichere Umschaltung auf ein niedriges Spannungslevel der Servoleistungsversorgung (Antriebsleistungsversorgung).

In einer möglichen Ausführungsform ist die Sicherheitssteuerung 250 angepasst, den zweiten Schalter K2 mit einer vorbestimmten Verzögerung nach dem Öffnen des ersten Schalters K1 zu schließen. In dem Beispiel in Figur 3A oder in Figur 3B übernimmt die sichere SPS ("SafeSPS") 350 die Funktion der Sicherheitssteuerung 250. Dies kann durch ein entsprechendes Programmieren der sicheren SPS erfolgen. Zum Beispiel würde eine solche sichere SPS die Steuerung der Schalter übernehmen, wie oben beschrieben.

Eine speicherprogrammierbare Steuerung (SPS) ist ein Gerät, das zur Steuerung oder Regelung einer Maschine oder Anlage eingesetzt und auf digitaler Basis programmiert wird. Sie kann die "festverdrahtete" verbindungsprogrammierte Steuerung ersetzen. Sicherheitssteuerungen entstanden aus der Anforderung, Sicherheit ähnlich wie bei einer speicherprogrammierbaren Steuerung (SPS) per Programmierung verschalten zu können. Am Anfang standen zentrale, später folgten dezentrale Systeme in Verbindung mit sicheren Bussystemen. Der Begriff "sichere SPS" hier bezeichnet eine SPS, welche eine oder mehrere Sicherheitsfunktionen umsetzt. Ein kombinierter Einsatz der vorliegenden Erfindung zusammen mit weiteren Sicherheitsfunktionen kann Gefahr und Verletzungsrisiko weiter reduzieren und deshalb vorteilhaft sein. Die SPS kann (alternativ oder zusätzlich zum Steuern) die Schalteinrichtung (insbesondre die Schalter K1, K2) überwachen. Die Schalteinrichtung kann zum manuellen Umschalten (z.B. Umlegen des Schalters) ausgestaltet sein.

Zusätzlich kann das Sicherheitssteuerungssystem 200 eine Spannungsabbauschaltung 360 enthalten. Diese umfasst einen Spannungsabbauschalter K3 und einen Spannungsabbauwiderstand R. Wie man Figur 3A und Figur 3B entnimmt, ist die Spannungsabbauschaltung 360 über den dritten Schalter K3 mit dem dritten Anschluss (dem Anschluss zu der Verarbeitungsmaschine 330, beziehungsweise zu dem Antriebssystem der Verarbeitungsmaschine) trennbar verbunden. Der Spannungsabbauschalter K3 kann beispielsweise ein im Handel üblicher Schalter oder Schaltschütz sein.

Nach einer vorteilhaften Ausführungsform ist die Steuerung angepasst, den Spannungsabbauschalter K3 nach dem Öffnen des ersten Schalters K1 zu schließen, und spätestens vor dem Wieder-Schließen des ersten Schalters K1 zu öffnen. In dieser Weise wird eine mögliche hohe Restspannung im Zwischenkreis an dem Widerstand R abgebaut.

Es ist möglich, den Kreis K3-R3 auch während des Testbetriebs geschlossen zu lassen (d.h. die Spannungsabbauschaltung 360 über den Schalter K3 angeschlossen halten), da der Strom über den Spannungsabbauwiderstand R üblicherweise verschwindend gering ist (z.B. 24mA bei R=1kΩ). Dies kann sicherheitstechnisch vorteilhaft sein, da eventuell fehlerbedingt auftretende Spannungen während des Test- oder Einrichtbetriebs abgebaut werden können.

Alternativ kann man den Spannungsabbauschalter K3 vor dem Schließen des zweiten Schalters K2 öffnen.

Eine beispielhafte Reihenfolge, in der die Schalteinrichtung 240 (welche die Schalter K1 und K2 enthalten kann, wird in Figuren 3A und 3B dargestellt) von der Sicherheitssteuerung 250 (350 in dem Beispiel von Figuren 3A und 3B) gesteuert wird, könnte wie folgt sein:
1) Ein sicheres (sicher angesteuertes) Öffnen der Standard-Leistungsversorgung 310 durch den ersten Schalter K1.
2) Schließen von K3 zur definierten Reduktion der Zwischenkreisspannung (1s..3s) über den Widerstand R.
3) Verzögertes (sicher verzögertes) Schließen von dem zweiten Schalter K2 der reduzierten Zwischenkreisspannung (z.B. 24 V).

Diese beispielhafte Schaltreihenfolge kann bei Anwahl eines Sonderbetriebs (z.B. des Einrichtbetriebs oder Testbetriebs) erfolgen, um damit eine sichere Umschaltung von dem Betriebsspannungslevel auf ein niedriges Spannungslevel der Servoleistungsversorgung zu realisieren.

Weitere Absicherungen der Schaltungen und Schalter können, falls erforderlich, eingefügt werden. Beispielsweise kann der Schalter K1 doppelt ausgeführt werden. Zusätzlich oder alternativ kann der Schaltzustand von dem ersten Schalter K1 (sicher) überwacht werden. Ähnlich kann der Schalter K2 doppelt ausgeführt werden und/oder überwacht werden.

Ein gegebenenfalls von den Servoantrieben über das Bussystem zur Verfügung gestellt Messwert der Zwischenkreisspannung kann zusätzlich für die Schaltungsfunktionsverbesserung benutzt werden.

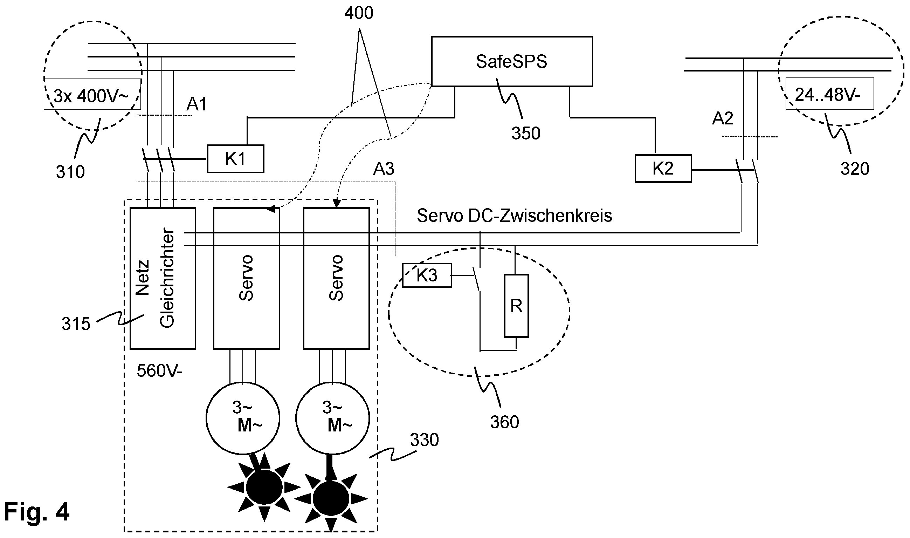

Figur 4 zeigt ein weiteres Beispiel eines Sicherheitssystems für eine Verarbeitungsmaschine, ähnlich dem aus Figur 3A. Zusätzlich sind in Figur 4 Steuerungssignale 400 angezeigt, durch die die sichere Steuerung des Antriebssystems der Verarbeitungsmaschine gewährleistet sein kann. Eine solche sichere Steuerung kann zusätzlich zu der hier beschriebenen Zwischenkreisspannungssenkung eingesetzt werden. Der Begriff "sicher" in diesem Kontext bezeichnet Funktionen (Steuerung, Überwachung von Zuständen und Bewegungen), welche als Ziel haben, das Risiko, welches aus der Verarbeitungsmaschine ausgeht, zu reduzieren. Wann eine Funktion sicher ist, kann zum Beispiel durch Produktspezifikationen oder durch Sicherheitsstandard(s) festgelegt werden.

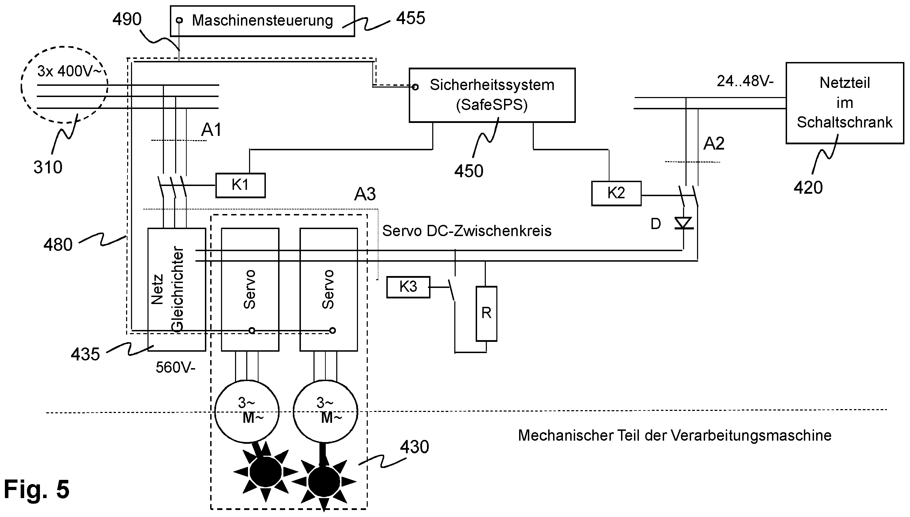

Figur 5 zeigt ein weiteres Beispiel eines Sicherheitssteuerungssystems für eine Verarbeitungsmaschine, ähnlich dem aus der Figuren 3 und 4. Das Sicherheitssteuerungssystem umfasst des Weiteren eine Trenndiode D, welche die Verbindung zwischen dem zweiten Anschluss A2 und dem dritten Anschluss A3 in eine Richtung trennt. Bei geschlossenen zweiten Schalter K2 verhindert die Trenndiode D einen Stromfluss vom dritten Anschluss A3 zum zweiten Anschluss A2.

Wie man der Figur 5 entnimmt, ist die Sperrdiode D in die 24V Einspeisung eingefügt worden. Damit ist der Zeitpunkt des Umschaltens von dem Schalter K1 und dem Schalter K2 beim Wechsel in einen Sonderbetrieb einfacher und spannungslose Zustände im Zwischenkreis können verhindert werden. In einer beispielhaften Ausführungsform könnte man auf K2 verzichten, und nur mit einer großen Sperrdiode D (z.B.1000V Sperrspannung) automatisch den Zwischenkreis mit dem niedrigen Spannungslevel versorgen, wenn die hohe Spannung nicht mehr da ist. In dem Fall würde die Schalteinrichtung 240 den Schalter K1, nicht aber den Schalter K2 enthalten. Aus Sicherheitsgründen (Z.B. beim Versagen von der Diode D könnten dann 560V auf dem 24V Netz liegen) könnte es jedoch von Vorteil sein, den Schalter K2 auch zusätzlich zu der großen Sperrdiode beizubehalten oder alternative Sicherheitsmittel einzusetzen.

Das Einschalten von K2 kann dann in einem Bereich mit noch ausreichend hoher Spannung auf dem Zwischenkreis (40-80V) erfolgen. Die Diode sperrt das Einwirken auf den 24V Bereich. Sobald die Zwischenkreisspannung durch den Widerstand R den Bereich von 24V erreicht, öffnet die Diode D, und das 24V-Netzteil übernimmt die Versorgung. Damit kann eine unterbrechungsfreie Stromversorgung des Zwischenkreises (USV) gewährleistet werden. Der obenerwähnte Bereich von 40-80V ist nur exemplarisch. Prinzipiell kann die Spannung kleiner sein als die erste Spannung und größer als Null, oder in größer als die zweite Spannung. Die Sicherheitssteuerung 450 kann ausgebildet sein, den zweiten Schalter K2 entsprechend zu schalten (steuern).

Figur 5 zeigt des Weiteren, dass die zweite Spannungsquelle 420 beispielsweise von einem Netzteil in einem Schaltschrank erzeugt werden kann. Die vorliegende Erfindung ist jedoch auf keine besondere Art der Spannungsquelle eingeschränkt. Eine Batterie oder ein Stromaggregat können ebenfalls eingesetzt werden. In den Figuren 3 und 4 war ein Gleichrichter ein Teil der Verarbeitungsmaschine. Figur 5 zeigt ein Beispiel, in dem der Gleichrichter 435 von der Verarbeitungsmaschine 430 separat ist. Das Blockschaltdiagramm von Figur 5 könne aber genauso gut einen in der Verarbeitungsmaschine integrierten Gleichrichter aufweisen.

Figur 5 verdeutlicht auch die Unterscheidung zwischen der Maschinensteuerung 455 und der Sicherheitssteuerung 450, welche funktional, aber meistens auch strukturell unterschiedlich sind (z.B. unterschiedliche Geräte). Die Maschinensteuerung 455 gehört funktional zu der Verarbeitungsmaschine, kann jedoch von dieser räumlich getrennt sein. Die gestrichelte Linie 480 zeigt den Weg eines Sicherheitssteuerungssignals. Die volle Linie zeigt das Kommunikationsbussystem und den Weg eines Maschinensteuerungssignals 490.

Es ist in Praxis üblich, eine Maschinensteuerung 455, und eine davon getrennte Sicherheitsteuerung 450 einzusetzen, die über einen Kommunikations-Bussystem verbunden sind. Ebenso können an diesem Bussystem die einzelnen Antriebssteuerungen der Servos hängen. Alle Bedienhandlungen, die Betriebsart, Maschinengeschwindigkeit und die Bewegungsabfolgen in dem Produktion- und Einrichtbetrieb (oder Testbetrieb) der einzelnen Achsen können über die zentrale Maschinensteuerung organisiert werden. Es ist möglich, das Bussystem für die Maschinensteuerung und das Bussystem für die Sicherheitssteuerung zu trennen, beziehungsweise ein gemeinsames Bussystem dafür bereitzustellen.

Die vorliegende Erfindung ist nicht auf eine besondere Ausgestaltung der Sicherheitssteuerung 450 eingeschränkt. Rein funktionell ist keine separate Sicherheitseinrichtung oder "SafeSPS" 450 erforderlich. Eine Maschinensteuerung 455 könnte beide Arten von Funktionen (Maschinensteuerung und Sicherheitssteuerung) vollumfänglich implementieren. Es sind unterschiedliche Umsetzungen denkbar und ausführbar. Jedoch kann in den vielen marktüblichen Umsetzungen die Maschinensteuerung 455 typischerweise keine ausreichende Garantie für die Sicherheit des Betriebes gewährleisten. Die "SafeSPS" 450 wiederum steuert typischerweise die Maschine nicht, sondern ist nur für die garantierte Sicherheit der Abläufe oder Betriebszustände zuständig und gegebenenfalls für deren Überführung in einen sicheren Zustand verantwortlich. Wie bereits oben erwähnt, kann es, z.B. im Falle von vorhandenen Funktionen zur sicheren begrenzten Bewegung der Sicherheitssteuerung, über den Bus zwischen der Sicherheitssteuerung 450 und den (Sicherheits-)Servoantrieben, oder allgemein Motoren, der Verarbeitungsmaschine 430 eine eigenständige sichere Kommunikation geben.

Nach einer vorteilhaften Ausführungsform ist die Sicherheitssteuerung 450 des Weiteren angepasst, in dem Test- oder Einrichtbetrieb das Moment, die Drehzahl und/oder die Position von einem oder mehreren Servomotoren der Verarbeitungsmaschine sicher zu überwachen.

Falls das Moment oder die Drehzahl von einem oder mehreren Servomotoren der Verarbeitungsmaschine einen vorbestimmten Maximalwert überschreitet, wird gemäß einer Sicherheitsfunktion der Sicherheitssteuerung der Verarbeitungsmaschine die Bewegung sicher stillgesetzt. Beim Erfüllen von vorbestimmten Bedingungen, kann auch, als eine zusätzliche Sicherheitsmaßnahme, der dritte Anschluss sowohl von dem ersten Anschluss als auch von dem zweiten Anschluss getrennt werden. Die vorbestimmten Bedingungen können, wie oben erwähnt, Überschreiten von Maximalwerten für das Moment oder die Drehzahl oder das Überschreiten eines vorbestimmten Gebiets sein.

Es existieren einige Beispiele für sichere begrenzte Bewegung, welche nicht nur mit einer sicheren SPS umgesetzt, sondern auch durch sichere Achsen unterstützt werden können. Die Funktion "sicher begrenzte Geschwindigkeit" (SLS, Safe limited Speed) überwacht den Antrieb auf Einhaltung einer definierten Maximalgeschwindigkeit. Bei Überschreiten des Geschwindigkeitsgrenzwertes wird der Antrieb abgeschaltet. Sicher begrenzte Position (SLP, Safe limited position) übrwacht alle Endlagen, wie z.B. die sichere Bereichsüberwachung an Robotern oder Linearachsen. Weitere Funktionen, wie das sichere begrenzte Drehmoment (SLT) sind bekannt und einsetzbar.

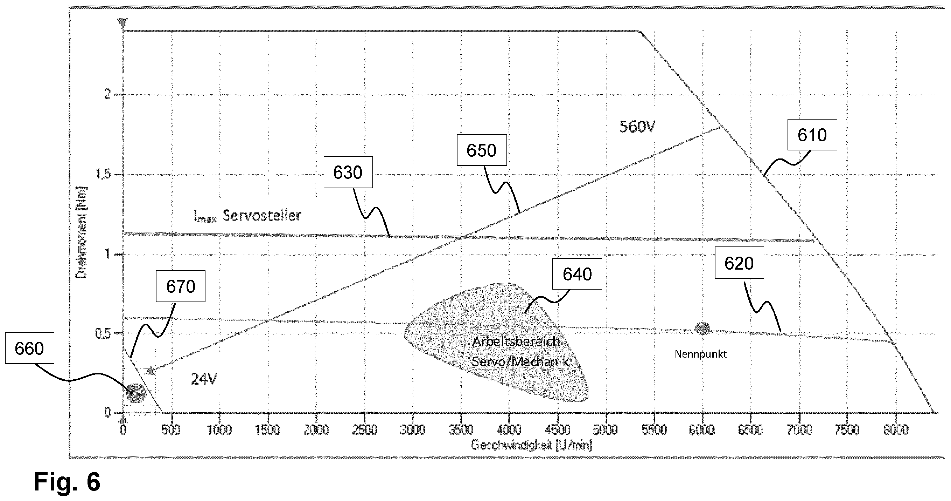

Figur 6 zeigt eine Abhängigkeit des erreichbaren Drehmoments von der Drehgeschwindigkeit (in Umdrehungen pro Minute, also die Drehzahl) zur Erläuterung einer Drehzahl-Drehmomentkennlinie von einem Motor. Die äußere Linie 610 stellt eine physikalische Grenze des Motors dar. Der obere Teil der Linie 610 entspricht der Stromgrenze des Motors. Der absteigende Teil der Linie 610 (rechts) entspricht der Drehzahlbegrenzung die sich durch die Spannung (z.B. 560V) des Zwischenkreises des Servostellers bildet.

Die mittlere Linie 620 ist die Dauerbelastungskennlinie für 100°C Motortemperatur, rechts bei 6000U/min und 0,6Nm befindet sich ein Motor-Nennpunkt. Die mittige Linie 630 ist beispielhaft für eine Einschränkung des Motor-Maximalmoments, wenn ein Servosteller eine Stromgrenze hat, welche unterhalb des maximalen Motorstroms liegt. Eine graue Fläche 640 stellt beispielhaft die während des Produktionszyklus typischerweise genutzten Drehzahl/Drehmomentbereiche dar. Ein Pfeil 650 stellt eine sichere Verschiebung der Drehzahl-Drehmoment Grenzkennlinie, wie sie durch die erfindungsgemäße Sicherheitsschaltung bewirkt werden kann.

Ein Punkt 660 und eine untere blaue Kennlinie 670 stellen den neuen möglichen Arbeitsbereich für den sicheren Einrichtbetrieb oder Testbetrieb dar, in dem der Antrieb mit der zweiten Spannungsquelle arbeitet. Aus der sicheren Verschiebung der Drehzahl-Drehmoment GrenzKennlinien ergibt sich eine sichere physikalische Maximalmomentreduktion und eine sichere physikalische Maximaldrehzahlreduktion, da sowohl der momentbildende Strom bei niedrigeren Spannungen eingeschränkt wird, als auch die durch Bewegung des Motors induktiv erzeugte Gegenspannung höhere Drehzahlen verhindert. Damit kann eine starke Leistungseinschränkung erfolgen und es wird nur ein stark eingeschränkter Aufbau von hohen kinetischer Energie im mechanischen System möglich. Es kann damit der volle Funktionsumfang eines Antriebs- und Automatisierungssystems im Rahmen der neuen physikalischen Grenzen gegeben sein. Es besteht die Möglichkeit, dass der Einrichtbetrieb oder Testbetrieb damit grundsätzlich sicher ist. Ein gemeinsamer Einsatz mit "SafeMotion"-Funktionen macht die Sicherheit effektiver und kann auch für anspruchsvollere Anwendungen die Gefährdung ausreichend reduzieren.

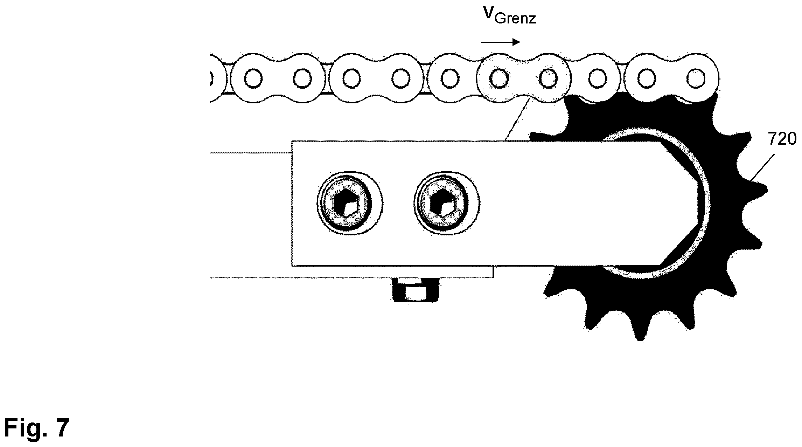

Figur 7 illustriert Beispiel eines Ketten-Antriebs, bei dem eine sichere Servoachse und die Funktion sicher begrenzter Geschwindigkeit (SLS) zum Einsatz kommen, welche eine maximale Worst-case-Reaktionszeit (Erkennen Fehler bis Auslösen des Safe Torque Off - STO) von 8ms hat, für den Fall, dass sie während des Einrichtens/Testens mit bestromtem Antrieb eine Bewegungsgrenze überschreitet (hier v_{Grenz} = 2mm/s Kettengeschwindigkeit). Das Kettengewicht liegt bei 70kg. Der Motor ist mit 1:10 zum Kettenritzel (r=30mm) 720 untersetzt. Das Systemreibmoment liegt bei 0,6Nm bezüglich der Motorwelle.

In dem Beispiel hat ein Servomotor an einem relativ großen Servosteller im Fehlerfall ein Spitzenmoment von ca. 15Nm. Das Trägheitsmoment von Motor und Getriebe sind 1,8 und 1,3 kgcm2. Im Fehlerfall ohne Nutzen einer reduzierten Drehzahl-Drehmoment Grenzkennlinie erreicht das Kettenritzel 720 bis zum aktiv werden des STO nach 8ms eine maximale Geschwindigkeit von 120 U/min und trudelt dann aus. Der zurückgelegte kritische Weg der Kette bis zum Stillstand liegt nach 220ms bei 36mm. Mit einer reduzierten Grenzkennlinie bei 24V Zwischenspannung (max. Motordrehmoment 3,6Nm, max. Motordrehzahl 120U/min) erreicht das Kettenritzel 720 nach 8ms eine maximale Geschwindigkeit von 9 U/min und trudelt dann aus. Der zurückgelegte kritische Weg bis zum Stillstand liegt nach 25ms bei 0,4mm.

Wie man aus diesen Beispielen sieht, kann das Nutzen der reduzierten Drehzahl-Drehmoment Grenzkennlinie die Sicherheit maßgeblich erhöhen.

Die vorliegende Erfindung und einige entsprechenden Ausführungsformen wurden oben anhand von Beispielen beschrieben, von welchen Details jedoch für die Erfindung nicht einschränkend sind und können durch andere Umsetzungen ersetzt werden. Die eingesetzten Servomotoren und Frequenzumrichter beziehungsweise Servosteller können handelsübliche elektrotechnische Geräte sein die zum Beispiel entsprechend der zu realisierenden Arbeitsaufgabe der Verarbeitungsmaschine (Bewegungsdynamik, Leistung, Drehmomentbereich, programmierbare Funktionen, Sicherheitsfunktionen) ausgewählt werden. Für eine praktische Lösung sollten die Frequenz-/Servosteller nicht außer Funktion gehen, wenn die Netzeinspeisung (400V) oder die Arbeitsleistungsversorgung durch den Zwischenkreis (326V-750V) deaktiviert wird. Das bedeutet unter anderem, dass es günstiger ist die Spannung für die Regelung und Steuerungsfunktionen des Stellers nicht aus dem Zwischenkreis zu versorgen. Die Frequenz-/Servosteller sollen eine Fremdeinspeisung der Zwischenkreisspannung erlauben und ermöglichen (z.B. durch Klemmen). Die Zwischenkreisspannung sollte weit genug absenkbar sein (z.B. 48V oder 24V), d.h. es sollten dadurch keine unquittierbaren Fehler entstehen. Die Funktionen der Steller sollten möglichst vollumfänglich erhalten bleiben, so dass die im Einrichtbetrieb und dem Testbetrieb bereitstehen können. Die vorliegende Erfindung ist jedoch auch dann einsetzbar, wenn nur ein Teil der im Produktionsbetrieb verfügbaren Funktionen im Test- und Einrichtbetrieb zur Verfügung steht.

Es können sowohl Steller mit Sicherheitsfunktionen (sogenannte "SafetyAchsen" oder Sicherheitsachsen) als auch ohne Sicherheitsfunktionen (unsichere Standardachsen) verwendet werden. Die Sicherheitstechnik ("SafetySPS", traditionelle Sicherheitstechnik (z.B. ein Notausgerät), oder Sicherheitschalter) kann aus zertifizierten Geräten bestehen die handelsüblich sind.

Die vorliegende Erfindung ist für verschiedene Varianten der Anwendungsfälle einsetzbar.

Normale elektromechanische Antriebsstränge für Arbeitsbewegungen, die mit Standardstellern/-motoren ausgerüstet sind, stellen typischerweise keine Bewegungs-Sicherheitsfunktionen für das Einrichten zur Verfügung. Diese sind unter anderem im Einricht- und Testfall bei geöffneten Schutztüren nur stromlos sicher. Ein Einrichtbetrieb mit Bestromung bzw. Bewegungen gilt grundsätzlich als gefährlich. Je nach elektrischer bzw. mechanischer Ausstattung, können solche Antriebstränge durch die Anwendung der erfindungsgemäßen Sicherheitsbeschaltung zu grundsätzlich ungefährlichen sicheren Antrieben werden ("Spielzeugantriebe"). Es sind dann keine weiteren Voraussetzungen/Maßnahmen nötig. Es ist keine Überwachung der Bewegung mit Sicherheitstechnik und es ist keine Sicherheitsachse nötig. Dabei könnte vorteilhaft eine Ausführung der Erfindung eingesetzt werden, welche ein separates Sicherheitssystem, wie in Figur 2 dargestellt (ohne die externe SPS) vorsieht. Diese kann zwischen den Antrieb und die Spannungsversorgung durch die Anschlüsse 210, 220, 230 (entsprechend A1, A2, A3 in Figuren 3-5) angeschlossen werden und muss nicht Teil der Verarbeitungsmaschine sein. Auf diese Weise ist es möglich, auch Verarbeitungsmaschinen, welche grundsätzlich keine Sicherheitssysteme bereitstellen oder üblicherweise verwenden, zum Einrichten/Testen sicherer betrieben werden.

Für andere elektromechanischen Antriebsstränge kann trotz Anwendung der erfindungsgemäßen Sicherheitsbeschaltung mit der erreichten Leistungseinschränkung kein ausreichender Nachweis von ungefährlichen Bewegungen erfolgen. Auch dann kann jedoch vorliegende Erfindung zum Einsatz kommen, zum Beispiel in Kombination mit weiteren Sicherheitsfunktionen.

Elektromechanische Antriebsstränge für Arbeitsbewegungen die schon geplant mit Sicherheitsstellern/-motoren ausgerüstet sind, haben üblicherweise Bewegungssicherheitsfunktionen zur Verfügung. Diese können im Einricht- und Testfall bei geöffneten Schutztüren zur Anwendung kommen, wenn der Nachweis gelingt, dass diese, voll leistungsfähig geblieben Antriebe durch die Sicherheitstechnik unter Kontrolle bleiben und ein uneingeschränkter Nutzerzugriff ungefährlich ist. Lässt sich dieser Nachweis (physikalische Gesetze) nicht erbringen (was häufig vorkommen kann), und ist deshalb auf Basis der zur Verfügung stehenden Sicherheitstechnik kein Einrichtbetrieb oder Testbetrieb möglich, wird über die erfindungsgemäße "sichere" Zwischenkreisabsenkung eine neue physikalische Basis geschaffen auf welcher der Nachweis der Sicherheit leicht möglich wird.

Die typischen Wechselspannungsversorgungen von Servoantrieben aus dem Netz können einphasig oder dreiphasig erfolgen. Der im internationalen Bereich übliche Spannungslevel liegt zwischen 110V und 240V einphasig und zwischen 208V und 460V dreiphasig. Der erste Anschluss kann für die erste Spannung ausgebildet sein, welches eine Einphasen-Wechselspannung von zumindest 110V oder eine Dreiphasen-Wechselspannung von zumindest 200 V ist. Der zweite Anschluss ist für die zweite Spannung ausgebildet, welche typischerweise eine Gleichspannung im Bereich von 24 V bis 48 V ist. Die vorliegende Erfindung ist jedoch durch diese Bereiche nicht eingeschränkt, denn die zugrundeliegenden Gedanken, eine Spannung für den Produktionsbetrieb und eine geringere Spannung für den Einricht- und Testbetrieb bereitzustellen und zwischen diesen sicher zu schalten, ist auch für andere Bereiche ohne Weiteres anwendbar.

Figuren 3 bis 5 zeigen Beispiele von Verarbeitungssystemen. Diese umfassen eine Verarbeitungsmaschine mit einem oder mehreren Servomotoren, eine Verarbeitungsmaschine mit einem oder mehreren Antrieben, bestehend aus Motoren und Umrichtern und einer Maschinensteuerung, sowie das oben beschriebene Sicherheitssteuerungssystem (z.B. gemäß Figur 2) zum Absichern der gesteuerten Bewegungen der Verarbeitungsmaschine. Die Verarbeitungsmaschine (insbesondere derer Antriebssystem) ist angepasst, wenn die zweite Spannung angeschlossen ist, mit einer, im Vergleich zu Produktionsbetrieb reduzierten Geschwindigkeit und Kraft des einen oder mehrerer Servomotoren zu arbeiten. Auch wenn in obigen Beispielen mehrfach Servoantriebe erwähnt worden sind, ist die vorliegende Erfindung auf diese nicht eingeschränkt. Sie kann mit anderen Antriebsarten verwendet werden, die derartige Umschaltungen der Zwischenkreisspannung erlauben.

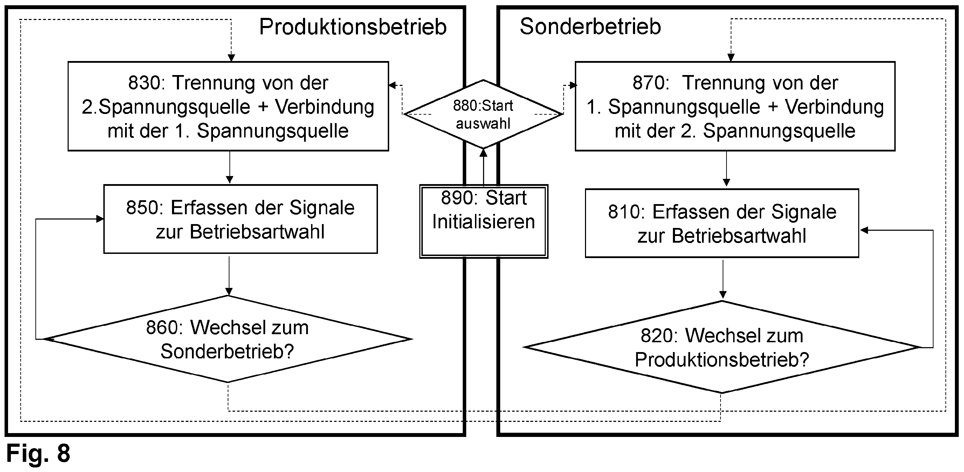

Figur 8 zeigt zwei Flussdiagramme, einen für den Produktionsbetrieb (links), einen für den Sonderbetrieb (rechts), welches ein beispielhaftes Verfahren zur Sicherheitssteuerung für eine Verarbeitungsmaschine darstellt. Das Verfahren umfasst ein Erfassen 810, 850 von Signalen zum Wechseln der Betriebsart der Verarbeitungsmaschine. Der Wechsel kann beispielsweise zwischen einem Produktionsbetrieb und einen Sonderbetrieb (z.B. Einrichtbetrieb oder Testbetrieb) erfolgen. Initial, d.h. beim Einschalten der Verarbeitungsmaschine 890 erfolgt der Start entsprechend der Auswahl 880 der gewählten Betriebsart, entweder in den Modus für Produktionsbetrieb (1) oder in den Sonderbetrieb (2). Die Betriebsart kann entweder vorkonfiguriert sein, oder durch einen Benutzer einstellbar. Beim Einschalten der Verarbeitungsmaschine kann zunächst ein Signal erfasst werden, welcher die eingestellte Betriebsart übermittelt.

Im ersten Fall (1) wird eine erste Spannungsquelle zum Bereitstellen einer ersten Spannung mit einem elektrischen Antriebssystem der Verarbeitungsmaschine verbunden 830. Im Produktionsbetrieb werden Signale erfasst 850, welche den Wechseln zum Sonderbetrieb bewirken. Falls kein Signal zum Einleiten des Sonderbetriebes ("Nein" im Schritt 860) detektiert wird, verbleibt die Verarbeitungsmaschine in der Betriebsart Produktionsbetrieb und das Verfahren führt wieder zum Erfassen 850 der Signale. Nach dem Erfassen 850 von einem Signal zum Wechseln von dem Produktionsbetrieb in den Einrichtbetrieb oder Testbetrieb ("Ja" im Schritt 860) erfolgt der Wechsel zum Sonderbetrieb und es werden die folgenden Schritte 870 durchgeführt: (i) das elektrischen Antriebssystem der Verarbeitungsmaschine von der ersten Spannungsquelle trennen und (ii) den elektrischen Antriebssystem der Verarbeitungsmaschine mit einer zweiten Spannungsquelle zum Bereitstellen einer zweiten Spannung verbinden, welche niedriger ist als die erste Spannung. Der Schritt 870 wird auch nach dem Initialisieren der Verarbeitungsmaschine aktiv, wenn zu diesem Zeitpunkt die Startauswahl Sonderbetrieb aktiv war.

Im Sonderbetrieb werden Signale erfasst 810, welche den Wechseln zurück zum Produktionsbetrieb bewirken. Nach dem Erfassen 810 von einem Signal zum Starten des Produktionsbetriebes ("Ja" im Schritt 820), werden die folgenden Schritte 830 durchgeführt: (i) das elektrischen Antriebssystem der Verarbeitungsmaschine von der zweiten Spannungsquelle trennen und (ii) den elektrischen Antriebssystem der Verarbeitungsmaschine mit der ersten Spannungsquelle zum Bereitstellen einer ersten Spannung verbinden, welche höher ist als die zweite Spannung. Falls kein solches Signal zum Starten des Produktionsbetriebes ("Nein" im Schritt 820) detektiert wird, verbleibt die Verarbeitungsmaschine im Sonderbetrieb und das Verfahren führt wieder zum Erfassen 810 der Signale.

Die Umschaltung in den Sonderbetrieb kann durch einen Betriebsartenwahlschalter oder sicheren Betriebsartenwahlschalter in Hardware umgesetzt oder durch Berührungspanel oder Ähnliches durchgeführt werden. Zusätzlich oder als eine Alternative kann das Umschalten automatisch auf Basis der Situation an der Maschine durchgeführt werden. Zum Beispiel kann dann umgeschaltet werden, wenn die Sicherheitstüren der Maschine geöffnet sind. Ein Vorteil der vorliegenden Erfindung ist es, dass die Sicherheitsteuerung die Sicherheit gewährleisten oder verstärken kann und damit gefährdenden Zustände sicher kontrolliert und verhindert werden. Das Erfassen von den Signalen kann über ein Bussystem durchgeführt werden.

Wie bereits oben mit Bezug auf das Sicherheitssteuerungssystem beschrieben, kann die zeitliche Abfolge von dem Schalten der Schalter K1, K2, und K3 mit oder ohne der Diode D als Teil des Verfahrens koordiniert werden.

## Patentansprüche

1. Ein Sicherheitssystem für ein elektromechanisches Antriebssystem einer Verarbeitungsmaschine (130; 330; 430), umfassend:
einen ersten Anschluss (210; A1), verbindbar mit einer ersten Spannungsquelle zum Bereitstellen einer ersten Spannung für die Leistungsversorgung des elektromechanischen Antriebssystems in einem Produktionsbetrieb;
einen zweiten Anschluss (220; A2), verbindbar mit einer zweiten Spannungsquelle zum Bereitstellen einer zweiten Spannung, welche niedriger ist als die erste Spannung, für die Leistungsversorgung des elektromechanischen Antriebssystems in einem Test- oder Einrichtbetrieb;
einen dritten Anschluss (230; A3), verbindbar mit dem elektromechanischen Antriebssystem der Verarbeitungsmaschine;
eine Schalteinrichtung (240) zum Verbinden des dritten Anschlusses (230; A3) mit entweder dem ersten Anschluss (210; A1) oder dem zweiten Anschluss (220; A2); und
eine Sicherheitssteuerung (250; 350; 450; 550) zum Steuern und/oder Überwachen der Schalteinrichtung.

2. Das Sicherheitssystem nach Anspruch 1, wobei die Schalteinrichtung (240) umfasst:
einen ersten Schalter (K1) welcher den dritten Anschluss mit dem ersten Anschluss (A1) trennbar verbindet; und
einen zweiten Schalter (K2) welcher den dritten Anschluss mit dem zweiten Anschluss (A2) trennbar verbindet.

3. Das Sicherheitssystem nach Anspruch 2, wobei die Sicherheitssteuerung (350; 450; 550) angepasst ist, den zweiten Schalter (K2) mit einer vorbestimmten Verzögerung nach dem Öffnen des ersten Schalters (K1) zu schließen.

4. Das Sicherheitssystem nach einem der Ansprüche 1 bis 3, umfassend des Weiteren eine Trenndiode (D), welche die Verbindung zwischen dem zweiten Anschluss (A2) und dritten Anschluss (A3) in eine Richtung trennt.

5. Das Sicherheitssystem nach Anspruch 2 oder 3, umfassend des Weiteren eine Trenndiode (D), welche die Verbindung zwischen dem zweiten Anschluss (A2) und dritten Anschluss (A3) in eine Richtung trennt,
wobei bei geschlossenen zweiten Schalter (K2) die Trenndiode (D) einen Stromfluss vom dritten Anschluss (A3) zum zweiten Anschluss (A2) verhindert.

6. Das Sicherheitssystem nach einem der Ansprüche 1 bis 5, wobei die Sicherheitssteuerung angepasst ist, die Schalteinrichtung wie folgt zu überwachen:
- wenn der dritte Anschluss (230; A3) mit dem ersten Anschluss (210; A1) verbunden wird, den Produktionsbetrieb zu detektieren, und
- wenn der dritte Anschluss (230; A3) mit dem zweiten Anschluss (220; A2) verbunden wird, den Test- oder Einrichtbetrieb zu detektieren.

7. Das Sicherheitssystem nach einem der Ansprüche 1 bis 6, wobei die Sicherheitssteuerung angepasst ist, die Schalteinrichtung wie folgt zu steuern:
- für den Produktionsbetrieb den dritten Anschluss (230; A3) mit dem ersten Anschluss (210; A1) zu verbinden, und
- für den Test- oder Einrichtbetrieb den dritten Anschluss (230; A3) mit dem zweiten Anschluss (220; A2) zu verbinden.

8. Das Sicherheitssystem nach Anspruch 7, wobei die Sicherheitssteuerung (250) konfiguriert ist, den zweiten Schalter mit dem dritten Anschluss (A3) zu verbinden, wenn die Spannung an dem elektromechanischen Antriebssystem der Verarbeitungsmaschine kleiner als die erste Spannung und größer als Null ist.

9. Das Sicherheitssystem nach Anspruch 7 oder 8, welches des Weiteren eine Spannungsabbauschaltung (360) umfasst, wobei
die Spannungsabbauschaltung (360) einen Spannungsabbauschalter (K3) und einen Spannungsabbauwiderstand (R) enthält;
die Spannungsabbauschaltung (360) über den dritten Schalter (K3) mit dem dritten Anschluss (A3) trennbar verbunden ist; und
die Sicherheitssteuerung (350) angepasst ist, den Spannungsabbauschalter (K3) nach dem Öffnen des ersten Schalters (K1) zu schließen, und spätestens vor dem Wieder-Schließen des ersten Schalters (K1) zu öffnen.

10. Das Sicherheitssystem nach einem der Ansprüche 1 bis 9, wobei wenigstens einer von dem ersten Schalter (K1), dem zweiten Schalter (K2) und dem Spannungsabbauschalter (K3) ein Schaltschütz ist.

11. Das Sicherheitssystem nach einem der Ansprüche 1 bis 10, wobei die Sicherheitssteuerung (350) des Weiteren angepasst ist, in dem Test- oder Einrichtbetrieb:
- das Moment, die Drehzahl und/oder die Position von einem oder mehreren Servomotoren der Verarbeitungsmaschine sicher zu überwachen; und
- falls das Moment, die Drehzahl und/oder die Position von einem oder mehreren Motoren der Verarbeitungsmaschine einen vorbestimmten Maximalwert und oder einen vorbestimmten Bereich überschreitet, gemäß einer Sicherheitsfunktion der Sicherheitssteuerung (350) der Verarbeitungsmaschine, die Bewegung stillzusetzten.

12. Das Sicherheitssystem nach einem der Ansprüche 1 bis 11, wobei
die Sicherheitssteuerung (350) als eine sichere speicherprogrammierbare Steuerung, SPS, verwirklicht ist und/oder der zweite Anschluss (A2) für die zweite Spannung ausgebildet ist, welche eine Gleichspannung von 24V bis 48V ist und/oder der erste Anschluss (A1) für die erste Spannung ausgebildet ist, welche eine Einphasen-Wechselspannung von zumindest 110V oder eine Dreiphasen-Wechselspannung von zumindest 200 V ist.

13. Ein Verarbeitungssystem umfassend:
eine Verarbeitungsmaschine mit einem oder mehreren Antrieben, umfassend Motoren, Umrichter und eine Maschinensteuerung;
das Sicherheitssystem nach einem der Ansprüche 1 bis 12;
wobei die Verarbeitungsmaschine angepasst ist, wenn die zweite Spannung angeschlossen ist, mit einer, im Vergleich zu Produktionsbetrieb reduzierten Geschwindigkeit und Kraft des einen oder mehrerer Servomotoren zu arbeiten.

14. Ein Verfahren zur Sicherheitssteuerung für ein elektromechanisches Antriebssystem einer Verarbeitungsmaschine, umfassend:
Erfassen eines Signals zum Wechseln der Betriebsart,
nach dem Erfassen von einem Signal zum Wechseln der Betriebsart von dem Produktionsbetrieb in den Einrichtbetrieb oder Testbetrieb:
- Trennen der Leistungsversorgung eines elektromechanischen Antriebssystems der Verarbeitungsmaschine von der ersten Spannungsquelle und
- Verbinden des elektromechanischen Antriebssystems der Verarbeitungsmaschine mit einer zweiten Spannungsquelle zum Bereitstellen einer zweiten Spannung, welche niedriger ist als die erste Spannung;
nach dem Erfassen von einem Signal zum Wechseln der Betriebsart von dem Einrichtbetrieb oder Testbetrieb in den Produktionsbetrieb:
- Trennen des elektromechanischen Antriebssystems der Verarbeitungsmaschine von der zweiten Spannungsquelle und
- Verbinden des elektromechanischen Antriebssystems mit der ersten Spannungsquelle.

15. Das Verfahren nach Anspruch 14, des Weiteren umfassend:
einen Übergang beim Einschalten der Maschine in den
- Produktionsbetrieb; nach dem Erfassen von einem Signal zum Aktivieren des Produktionsbetriebes, Verbinden der ersten Spannungsquelle zum mit dem elektromechanischen Antriebssystem der Verarbeitungsmaschine; oder
- Einrichtbetrieb oder Testbetrieb; nach dem Erfassen von einem Signal zum Aktivieren des Sonderbetriebes, Verbinden der zweiten Spannungsquelle mit dem elektromechanischen Antriebssystem der Verarbeitungsmaschine.
